# EUROPÄISCHE PATENTSCHRIFT

(11) **EP 2 150 896 B1**
(45) Veröffentlichungstag und Bekanntmachung des Hinweises auf die Patenterteilung: **28.02.2018**
(21) Anmeldenummer: 08773257.4
(22) Anmeldetag: 19.05.2008
(51) Int. Cl.: G06F 12/02

(54) **VERFAHREN ZUR SPEICHERVERWALTUNG**
METHOD FOR MEMORY MANAGEMENT
PROCÉDÉ DE GESTION DE MÉMOIRE

(30) Priorität: 18.05.2007 DE 102007023408
(43) Veröffentlichungstag der Anmeldung: 10.02.2010
(60) Teilanmeldung: 13000706.5
(73) Patentinhaber: Mobotix AG, 67722 Winnweiler (DE)
(72) Erfinder: HINKEL, Ralf, 67724 Höringen (DE)
(74) Vertreter: Vossius & Partner Patentanwälte Rechtsanwälte mbB
(86) Internationale Anmeldenummer: PCT/DE2008/000825
(87) Internationale Veröffentlichungsnummer: WO 2008/141616

(56) Entgegenhaltungen:
- US-A- 5 956 743
- US-A1- 2002 069 321
- US-A1- 2006 031 626

## Beschreibung

Die vorliegende Erfindung betrifft das oberbegrifflich Beanspruchte und befasst sich somit mit der Verwaltung von Speicher.

Wenn Daten in größeren Mengen an einem Gerät anfallen, werden sie typisch auf Speicher geschrieben. Das Speichermedium kann dann zu einem späteren Zeitpunkt von der schreibenden Vorrichtung wieder gelesen werden, um die Daten zu erhalten oder es kann entnommen werden und mit einem anderen Gerät ausgelesen werden, um die Daten auf diese Weise zu transportieren. Problematisch ist dabei, dass die Einspeicherung von Daten regelmäßig so erfolgen muss, dass diese problemfrei wieder ausgelesen werden können. Dafür sind seit langem die Anlegung einer Dateizuordnungstabelle (File Allocation Table) und dergleichen bekannt, aus der die Stelle im Speicher, an der bestimmte Daten zu finden sind, ersehen werden kann. Neben der Tatsache, dass der Ort, an welchem Daten auf einem Speichermedium abgelegt sind, bekannt sein muss, ist aber für das Wiedereinlesen auch kritisch, dass die Daten nicht während des Schreib- /Lesevorganges korrumpiert werden. Bei Speichermedien wie Disketten war es deshalb während der sogenannten Formatierung üblich, einen Test dahingehend durchzuführen, ob in alle Bereiche problemfrei geschrieben werden kann oder ob defekte Speicherbereiche vorliegen. Dies ist auch von Festplatten usw. bekannt. Überdies ist es bekannt, bei computerinternen Speichern wie RAM-Speicher während der Computer-Bootphase einen Speichertest durchzuführen, indem bestimmte Datenmuster in den Speicher geschrieben und wieder ausgelesen werden. Treten dabei Fehler auf, kann eine Warnmeldung ausgegeben werden.

Problematisch ist allerdings, wenn während des Betriebs eines Wechselspeichermediums Fehler auftreten oder erkannt werden müssen. Ein Test hätte hier die Notwendigkeit zur Folge, Daten sukzessive auszulesen und wieder einzuspeichern und gegebenenfalls in einer Zwischenphase einen Test auf die korrekte Funktion des Speichers durchführen zu müssen. Dies ist kritisch im Hinblick auf den Energieverbrauch zum Auslesen, Testen und Wiedereinschreiben, was insbesondere bei batteriebetriebenen Geräten problematisch sowie aufwendig ist, wenn nur eine endliche Rechenkapazität zur Verfügung steht und/oder die Speicherbandbreite beschränkt ist.

Besonders problematisch wird die Speichersicherheit dann, wenn Medien verwendet werden, die besonders ausfallträchtig sind, wie dies bei elektronischen Speichermedium, etwa USB-Sticks, Compact-Flash-Speicherkarten und dergleichen der Fall ist. Diese haben im Regelfall nur eine endliche Anzahl von Schreib-/und Lesezyklen, die das Speichermedium überdauert, bevor mit erheblichen Defekten zu rechnen ist. Dies macht den Einsatz derartiger Speichermedien für sicherheitsrelevante Vorrichtungen zumindest schwierig.

Die US 2002/0069321 A1 betrifft einen Festplattencontroller, bei welchem ein Zähler die Anzahl erfolgreicher Sektortransferoperationen während eines aktuellen Plattenzugriffs detektiert.

Aus der US-PS 5,956,743 ist ein Verfahren über den Zugriff auf DRAM-Speicher bekannt, in welchem neben den eigentlichen Daten Overhead-Daten abgelegt werden sollen, wobei vorgeschlagen wird, eine bestimmte Anzahl von Speicherseiten zu lesen und dann den seitenanfordernden Host zu informieren.

Aus der US 2006/0155917 A1 ist ein Verfahren bekannt, mit welchem in Flash-Speichern eine Abnutzungsvergleichmäßigung erreicht werden soll. Dabei sollen Löschzugriffe gezählt werden.

Aus der US-PS 6,000,006 ist für Flash-Speicher ein Verfahren zur Vergleichmäßigung bekannt, wobei einerseits die Gesamtzugriffe gezählt werden und andererseits Zugriffe auf bestimmte Bereiche. Sobald beide Zählwerte eine bestimmte Größe überschritten haben, wird eine Zugriffsvergleichmäßigung veranlasst.

Aus der DE 10 2004 037 785 A1 entsprechend der US 2006/0031626 A1 ist ein Feldgerät für die Automatisierungstechnik mit einem Microprozessor und einem nichtflüchtigen, beschreibbaren Datenspeicher zum Speichern von Parameterwerten bekannt, welche für eine vorgegebene Maximalzahl von Schreibzugriffen pro Speicherplatz ausgelegt ist, wobei ein Zähler für die Schreibzugriffe auf den Datenspeicher vorgesehen ist. Zusätzlich soll eine Speicherverwaltungseinheit vorgesehen sein, die den Zählerstand des Zählers auswertet und ein Überschreiten der Maximalzahl von Schreibzugriffen auf einen Speicherplatz vermeidet. Bei Erreichen eines maximalen Zählerstandes an einem Speicherplatz ist eine Markierung notwendig, damit der Speicherplatz als verbraucht markiert wird. Er wird dann auf einen freien Speicherplatz verschoben, was auch zufällig geschehen kann.

Die Aufgabe der vorliegenden Erfindung besteht darin, Neues für die gewerbliche Anwendung bereitzustellen. Bevorzugte Ausführungsformen finden sich in den Unteransprüchen.

Die vorliegende Erfindung schlägt somit in einem ersten Grundgedanken ein Verfahren nach Anspruch 1 vor.

Wesentlich ist somit für die Erfindung, dass nicht etwa eine aktuelle Speicherauslastung weggeschrieben wird, sondern erfasst wird, wie oft ein Zugriff auf den Speicher erfolgt. Es wird somit nicht mehr der Füllgrad, sondern stattdessen die Abnutzung des Speichers erfasst, was es erlaubt, Prognosen über das zukünftige Speicherverhalten unabhängig von seinem aktuellen Füllgrad zu erstellen. Damit trägt das vorliegende Verfahren zur Erhöhung der Zuverlässigkeit der Speichernutzung bei und es ist besonders bevorzugt, es auch als zuverlässigkeitserhöhendes Verfahren einzusetzen. Die Anzahl von Speicherschreib- und/oder -lesezugriffen, im Ansprechen auf welche Speichernutzungsdaten bestimmt werden, kann einerseits eine zeitliche Anzahldichte erfassen, also etwa dann einen besonders hohen Speichernutzungsgrad signalisieren, wenn sehr oft kurze nacheinander auf den Speicher schreibend oder lesend zugegriffen wird. Auch in einem solchen Fall wird eine Speichernutzung zuverlässiger, weil damit Zugriffszeiten usw. besser erfasst werden können. Bevorzugt meint aber die Anzahl der Speicherschreib- und/oder -lesezugriffe, im Ansprechen auf welche die Speichernutzungsdaten bestimmt werden, die Integralmenge an Schreib -und/oder Lesezugriffen, etwa durch Angabe einer Absolutzahl von schreibenden oder lesenden Zugriffen, was etwa bei Festplatten sinnvoll ist, weil oftmals besonders bei wenig benutzten Speichern, auf denen nur sporadisch Daten abgespeichert werden müssen, die ansonsten in Ruhe befindliche Festplatte neu angetrieben werden muss, was zu einer besonders großen Belastung führt. Gleichwohl wird aber typisch die Anzahl von Schreib- und/oder -lesezugriffen dahingehend gewichtet erfolgen, dass zugleich die Menge an geschriebenen und/oder gelesenen Daten bei der Bestimmung der Anzahl miterfasst wird, um etwa die Gesamtdatenmenge, die seit Erfassen der Speichernutzungsdaten geschrieben und/oder gelesen wurde, zu bestimmen.

Es ist möglich und in einem solchen Fall bevorzugt, die Speichernutzungsdaten auf eine Anzahl von Speicherzugriffen lesender oder schreibender Art zu beziehen, die als maximal zulässig bekannt ist. Dabei ist einsichtig, dass als maximal zulässig bekannte Speicherzugriffszahlen zwar statistisch ermittelt werden müssen und insoweit ein überwachter Einzelspeicher ein Verhalten aufweisen kann, das vom statistisch beobachteten mittleren Verhalten von Speichern gleicher Bauart signifikant abweichen kann. Gleichwohl ist es möglich, die Speichernutzungsdaten auf eine solche Anzahl zu beziehen, beispielsweise in Form einer Prozentangabe einer Speicherabnutzung. Das typische Versagensverhalten von Speichern kann dabei mitberücksichtigt werden, etwa in dem zunächst bei einer Speichermedium-Formatierung sichergestellt wird, dass keine Anfangsausfälle auftreten (sogenannte "Kindersterblichkeit" elektronischer oder anderer Vorrichtungen) und dass danach, wenn z.B. bei der Formatierung keine Fehler erkannt werden, eine Anzahl von Speicherzugriffen herangezogen wird, in der, je nach Sicherheitsbedürfnis des Speichernutzers, z.B. 95 oder 99% aller Speichermedien noch fehlerfrei funktionieren.

Die Anzahl kann dann beispielsweise durch Angabe einer prozentualen Abnutzung festgehalten werden. Die auf die Anzahl von Speicherschreib- und/oder -lesezugriffen bezogenen Speichernutzungsdaten können und sollen bevorzugt auf dem Speichermedium selbst abgelegt werden. Dies hat den Vorteil, dass bei Wechselmedien, für welche das Verfahren der vorliegenden Erfindung und die entsprechenden Treiber bevorzugt sind, die relevanten Daten mittransferiert werden und ein Nutzer nach Auslesen der entsprechenden Kennung feststellen kann, ob sich eine weitere Nutzung noch ungeachtet einer noch nicht erreichten als zulässig bekannten Maximalanzahl von Speicherzugriffen erfolgten Speichernutzung anbietet. Dies kann u.a. verneint werden, wenn ein Speichermedium etwa in einer Kamera nur selten ausgetauscht werden muss, dort aber intensiv auf das Medium zugegriffen werden muss und dann ein gegebenenfalls aufwendiger, weil mit Bewegung an der Kamera oder dergleichen verbundener Austausch nur zur Sicherung der Speicherzuverlässigkeit erfolgen muss, ohne dass das Medium an sich bereits einen den Wechsel erfordernden Abnutzungsgrad erreicht hat.

Aus dem Vorstehenden wird ersichtlich sein, dass das Verfahren für Wechselmedien besonders bevorzugt ist. Dies gilt zunächst für alle Arten von Wechselmedien, denn es wird einsichtig sein, dass etwa Magnetspeicher oder mehrfach zu beschreibende optische Platten nicht beliebig oft neu beschrieben werden können. Gleichwohl ist das Verfahren aber auch bei elektronischen Speichern wie USB-Sticks und/oder Flash-Speichern besonders sinnvoll, da gerade diese oftmals dann verwendet werden, wenn Daten in kritischen Situationen wie vor Vorträgen oder so transferiert werden müssen. Deswegen ist das Verfahren hier besonders bevorzugt.

Weiter ist es möglich, auf einer den Speicher nutzenden Vorrichtung die Nutzungsdaten des Wechselmediums abzulegen und zwar bevorzugt zusammen mit einer Kennung des Wechselmediums. Dies hat den Vorteil, dass selbst dann, wenn versehentlich Speichernutzungsdaten gelöscht werden, ein Nutzungsmaß zumindest annähernd reproduziert werden kann, da typisch beim Löschen von Dateien zumindest eine Speicherkennung wie eine Speicherbezeichnung nicht verändert wird und Löschvorgänge typisch nach einem Auslesen erfolgen, also nicht bei den häufigeren Schreibvorgängen in Geräten, die langfristig Daten zur Verfügung stellen müssen. Bei der bedeutsamen Nutzung mit Überwachungsgeräten wie Kameras können die Nutzungsdaten in einem Speicher wie einem EEPROM abgelegt werden; dies ist vorteilhaft, weil so eine Stromausfallsicherheit gewährleistet ist.

Bei der bevorzugten Variante wird bei Überschreiten eines Schwellwertes ein Hinweis generiert und/oder eine weitere Speicherung von Daten auf dem Medium unterbunden. Neben einer Hinweisgenerierung bei Schwellwertüberschreiten ist auch eine stetige oder auf Anforderung oder dergleichen erfolgende Anzeige bzw. Hinweisgenerierung über den Nutzungsstand möglich. Dies kann z. B. durch eine Balkenanzeige (LCD-Balken usw.) erfolgen.

Ob beide Schritte unternommen werden, Hinweisgenerierung und Neueinspeicherungsunterbindung, wird davon abhängig sein, wie kritisch der Erhalt der Daten tatsächlich ist und ob gegebenenfalls Hinweise sofort übermittelt werden können. Dies ist etwa bei netzgebundenen Kameras der Fall, die selbsttätig eine Verbindung herstellen können, um Warnhinweise an einen Administrator oder dergleichen abzusetzen oder dauerhaft über ein Netzwerk zu kommunizieren. Ein solcher Hinweis kann z. B. als SMS-Signal, als email, über Pager usw. erfolgen, aber auch optisch, z. B. durch blinkende LED am Gerät oder in dessen Nähe bzw. einer Zentrale.

Schutz wird auch beansprucht für den Betrieb einer Vorrichtung derart, dass das Verfahren ausgeführt wird sowie, für Treiber zum Betrieb eines Speichermediums nach einem der beschriebenen Verfahren. Zugleich wird Schutz für Datenträger beansprucht, auf denen derartige Treiber gespeichert sind. Schutz wird des Weiteren für Speichermedien mit einem Speicherbereich beansprucht, in dem nach dem Verfahren erzeugte Daten abgelegt sind und es wird Schutz beansprucht für Vorrichtungen mit einer Möglichkeit zur Verwendung eines Wechselspeichermediums, das nach dem erfindungsgemäßen Verfahren benutzt wird.

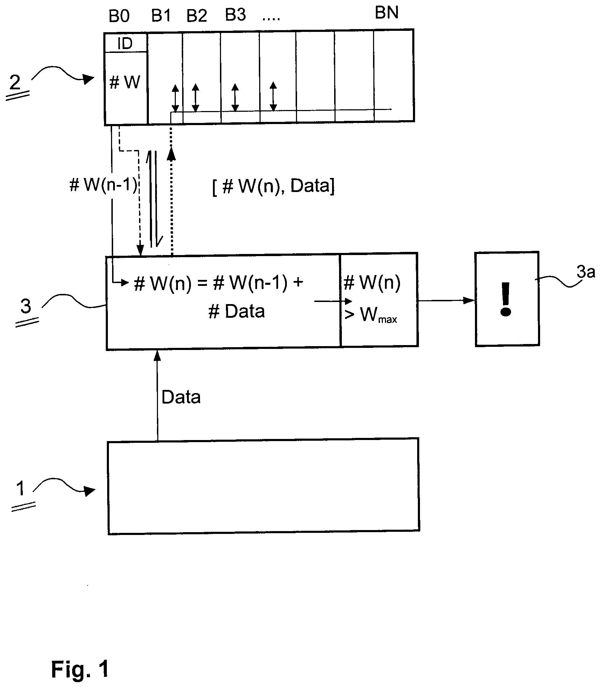

Die Erfindung wird im Folgenden nur beispielsweise beschrieben anhand der Zeichnung. In dieser ist dargestellt durch
- Fig. 1: ein die Ausführung des Verfahrens betreffendes Diagramm.

Nach Figur 1 ist eine allgemein mit 1 bezeichnete Vorrichtung 1 dazu ausgebildet, Daten für einen Speicher 2 bereitzustellen, wobei sie so ausgebildet ist, dass auch auf die Nutzung des Speichers bezogene Speicherdaten #W(n) gleichfalls für den Speicher 2 bereitgestellt werden, wobei diese Speichernutzungsdaten im Ansprechen auf eine Anzahl von Speicherschreib- und/oder -lesezugriffen zu bestimmen sind.

Im vorliegenden Beispiel ist die Vorrichtung 1 eine Überwachungskamera, die kontinuierlich Überwachungsdaten in dem Speicher 2 abspeichert bzw. bereitstellt.

Der Speicher 2 ist im vorliegenden Fall ein USB-Stick, dessen Speicherkapazität ausreicht, um für einen bestimmten Überwachungszeitraum wie beispielsweise eine Woche ohne Speichermedienwechsel und ohne Überfüllung des Speichers die Bilddaten aus der Überwachungskamera 1 aufzeichnen zu können. Die Kamera 1 ist dazu ausgelegt, nach einer Woche die ältesten Bilddaten auf den USB-Stick zu überschreiben. Überdies ist der USB-Stick, wie bei elektronischen Wechselspeichermedien per se bekannt, dazu ausgebildet, die zu speichernden Daten für den Benutzer transparent gleichmäßig auf Blöcke so zu verteilen, dass möglichst alle Blöcke weitgehendst gleichmäßig benutzt werden.

Die für die Speicherung von aufzuzeichnenden Bilddaten vorgesehenen Speicherblöcke sind in Figur 1 mit B1 bis BN bezeichnet. Die Menge an Daten, die zu einem gegebenen Einspeicherungszeitpunkt, beispielsweise bei der Einspeicherung eines Frames auftritt, wird mit #Data bezeichnet. Diese Menge bzw. Größe des zu speichernden Datenblockes ist dabei vorliegend streng zu unterscheiden von den eigentlichen Daten selbst.

Erfindungsgemäß ist nun ein Speicherblock B0 im USB-Speicher 2 reserviert, in dem eine Anzahl #W abgelegt ist, die für die Gesamtanzahl von Schreibzugriffen auf das Speichermedium 2 indikativ ist. Es ist weiter eine Stufe 3 vorgesehen, die insbesondere durch das Betriebssystem der Kamera 1 realisiert sein kann, in welcher die Menge an aktuell einzuspeichernden Daten #Data zu der Gesamtmenge an Daten, die bereits zuvor auf dem USB-Stick abgelegt worden sind, #W(n-1), addiert werden, um ein aktuelles Gesamtmaß #W(n) an insgesamt auf dem USB-Stick 2 seit Beginn einer Erfassung von Speichernutzungsdaten geschriebenen Datenmengen zu erhalten. Die auf die Gesamtanzahl von erfassten Speicherschreib- und/oder - lesezugriffen bezogene Zahl #W(n) wird vorliegend mit einem Maximalmaß Wₘₐₓ verglichen, das angibt, wie groß im statistischen Mittel die Anzahl von Speicherzugriffen sein kann, bevor sich Fehler durch Speicherverschleiß häufen. Durch diesen Vergleich kann bei Überschreiten einer kritischen Zahl eine Warnung, angedeutet bei 3a, ausgegeben werden und andererseits kann das aktualisierte Maß der integralen Speichernutzung #W(n) als neue Speichernutzungsdaten im Block B0 abgelegt werden. Es ist einsichtig, dass die Warnung, die bei 3a angedeutet ist, auf dem Speichermedium abspeicherbar ist, um gegebenenfalls mit Daten ausgelesen zu werden, sobald ein Benutzer den USB-Stick entfernt und Daten von diesem abzieht und/oder dass eine Fernwartung angefordert werden kann. Alternativ ist eine Warnung übrigens bei Auslesen des Speichers generierbar. All dies geschieht aufgrund des Vergleichs der tatsächlichen Zugriffe gegen ein statistisch festgestelltes Maximum an Zugriffen, die typisch möglich sind, ohne dass bereits signifikante Mengen an Ausfällen beobachtet sein müssen. Es sei aber darauf hingewiesen, dass gleichwohl eine Speicherüberprüfung, beispielsweise durch einen Paritätscheck regelmäßig zusätzlich durchgeführt werden kann, um auch dann Warnungen abzugeben, wenn ein konkretes Fehlverhalten ermittelt wird. Auch können konkrete Speicherfelder zum Anlass genommen werden, eine Warnung auszugeben.

Die Erfindung wird benutzt wie folgt:
Wenn ein neuer USB- oder anderer Wechselmassenspeicher an die Vorrichtung 1 angeschlossen wird, wird zunächst das Speichermedium initialisiert, indem eine Speicherkennung ID in den Speicherblock B0 geschrieben und festgehalten wird, dass die Anzahl für dieses Medium erfasster Schreibzugriffe #W(0) identisch gleich null ist. Nach dieser Initialisierung wird die Vorrichtung 1 in Betrieb gesetzt und es wird mit der Einspeicherung von Daten auf den USB-Stick begonnen. Mit jedem Datenblock, der auf den USB-Stick übertragen und eingespeichert werden soll, wird die vorherige Zahl an bereits erfolgten Speicherzugriffen #W(n-1) aktualisiert, indem diese Zahl aus dem Block B0 ausgelesen wird und zu dieser Zahl die Größe des aktuell zu schreibenden Datenblockes #Data addiert wird. Das erhaltene Ergebnis #W(n), das für die aktuelle Menge an auf dem USB-Stick insgesamt bereits erfolgten Schreibzugriffen indikativ ist, wird dann in den Block B0 unter Überschreiben des vorherigen Ergebnisses #W(n-1) geschrieben. Die Daten werden an die Blöcke B1 bis BN übertragen. Es sei darauf hingewiesen, dass, insoweit als durch den regelmäßigen Zugriff auf den Block B0 dort ein erhöhter Verschleiß zu erwarten ist, die per se bekannte Verteilung von Daten auf physikalische Speicherblöcke auch den Block B0 erfassen kann. Insofern ist nicht zwingend erforderlich, dass die Speichernutzungsdaten regelmäßig physikalisch an den selben Speicherort geschrieben werden müssen, so dass dort kein häufigerer Zugriff erfolgt als an anderen Speicherstellen.

Wenn ein Benutzer den USB-Stick nach einer bestimmten Zeit abzieht, etwa weil ein kritisches Ereignis beobachtet wurde und die Bilddaten dazu ausgewertet werden müssen, wird er einen anderen USB-Stick an der Kamera vorsehen, damit die Bilddatenaufzeichnung fortgesetzt werden kann. Dieser andere USB-Stick wird entweder bereits eine Kennung ID im Block B0 aufweisen und auch die Anzahl von bereits auf dem ausgetauschten USB-Stick in früheren Speicherbenutzungen abgespeicherten Datenblöcken enthalten, so dass der frühere Wert #W(n-1) für den ausgetauschten USB-Stick bei jedem Einschreiten von Daten aktualisiert werden kann oder der ausgetauschte USB-Stick ist noch nicht an einer Überwachungskamera verwendet worden und hat demgemäß keine entsprechende Kennung, so dass diese wie oben angegeben durch Initialisierung anzulegen ist. Dabei wird gegebenenfalls davon ausgegangen, dass der USB-Stick zuvor nicht signifikant benutzt worden ist, was gerade typisch deshalb unkritisch ist, weil besonders im Dauerbetrieb an Überwachungsvorrichtungen intensive Speichernutzungen erfolgen, während anderenfalls die Menge an Daten, die von einem einfachen Nutzer etwa im Bürobetrieb auf USB-Sticks gespeichert wird, allenfalls gering ist.

Der zuvor entfernte USB-Stick kann dann ausgelesen werden, wobei gleichzeitig ein Maß für dessen Abnutzung am Auslesegerät, beispielsweise einem zur Kamera mitgebrachten Laptop, mitausgelesen werden kann, um über die Weiternutzung des Speichers zu entscheiden. So kann festgelegt sein, dass ein Austausch bereits dann nötig ist, weil der ausgelesene USB-Stick vermutlich nicht mehr länger als weitere drei Wochen benutzt werden kann, die typischen Wartungsintervalle aber mit vier Wochen allgemein länger sind.

Es kann im Übrigen am USB-Stick selbst ebenfalls eine Anzeige, beispielsweise in LCD-Form oder dergleichen, vorgesehen sein, die bei Betrieb automatisch anspricht. Dazu können USBinterne Mikrocontroller ausreichen, die lediglich den Wert #W im Block B0 gegen den Wert Wₘₐₓ, der für den USB-Stick herstellerbedingt oder benutzerbedingt festgelegt ist, vergleichen, um eine Warnung oder etwa eine Bargraphanzeige zu aktivieren.

Es sei darauf hingewiesen, dass es möglich ist, durch Verwendung eines geeigneten Betriebs- und/oder Filesystems die Mehrfachverwendung von Zellen insbesondere zwecks Nutzungsdatenspeicherung zu vermeiden. Dabei können mit zu speichernden, zyklisch im Adressraum abgelegten Daten nach jedem Datenblock bzw. Datenstrom zusätzlich Nutzungsdaten in fortlaufender Weise mitgespeichert werden. Aus diesen kann dann die Gesamtnutzung erhalten werden. Durch das bevorzugt zyklische Durchlaufen des Adressraums wird auch die Speicherposition der Nutzungsdaten verändert. Insbesondere bei bekannter Größe wegzuschreibender Daten brauchen die Nutzungsdaten nicht nachgestellt zu sein.

## Patentansprüche

1. Verfahren zum Speichern von Daten auf einem Wechselspeichermedium (2)
durch eine sicherheitsrelevante
Vorrichtung (1),
wobei die Speicherkapazität des Wechselspeichermediums in der Verwendung ausreicht, um für einen bestimmten Überwachungszeitraum Daten ohne Speicherwechsel oder Überfüllung aufzuzeichnen,
aber das Speichermedium nur eine endliche Anzahl von Schreib- und/oder Lesezyklen überdauert, bevor mit erheblichen Defekten zu rechnen ist,
worin, damit bei Überschreiten eines Schwellwertes (Wmax) ein Hinweis (3a)
generiert werden kann, auf dem Speichermedium Speichernutzungsdaten an wechselnden Orten mit zu speichernden Daten mitabgelegt werden, so dass die Abnutzung des Speichers durch Schreib- und/oder Lesezugriffe erfasst werden kann,
**dadurch gekennzeichnet, dass**
auf dem Speichermedium die zu speichernden Daten gleichmäßig auf Blöcke (B0...BN)
so verteilt werden, dass alle
Blöcke möglichst weitgehend gleichmäßig benutzt werden, das Speichermedium initialisiert wird, wenn es neu an der sicherheitsrelevanten Vorrichtung in Betrieb genommen wird, wobei die Anzahl (#W(n))
der für dieses Medium erfassten
Schreibzugriffe auf Null gesetzt wird,
und dann
die Verwendung durch die sicherheitsrelevante Vorrichtung umfasst, dass
älteste Daten aus einem bestimmten Überwachungszeitraum in fortlaufender Weise mit neu zu speichernden Daten überschrieben werden, Speichernutzungsdaten mit den zu speichernden Daten in fortlaufender Weise derart mitabgespeichert werden, dass die Gesamtdatenmenge, die seit Erfassen der Speichernutzungsdaten geschrieben wurde, damit zu bestimmen ist und dass an keinem Ort der physikalischen Speicherung der Speichernutzungsdaten ein häufigerer Zugriff erfolgt als an anderen Speicherstellen.

2. Verfahren nach dem vorhergehenden Anspruch, **dadurch gekennzeichnet, dass** als Speichermedium ein elektronischer Speicher, insbesondere ein USB-Stick und/oder ein Flash-Kartenspeicher verwendet wird.

3. Treiber für die Verwendung eines Wechselspeichermediums durch eine sicherheitsrelevante Vorrichtung zum Speichern von Daten nach einem der vorhergehenden Verfahren.

4. Wechselbarer Speicher für eine sicherheitsrelevante Vorrichtung,
dessen Speicherkapazität ausreicht, um für einen bestimmten Überwachungszeitraum Daten ohne Speicherwechsel oder Überfüllung aufzuzeichnen,
der nur eine endliche Anzahl von Schreib- und/oder Lesezyklen überdauert, bevor mit erheblichen Defekten zu rechnen ist,
auf dem älteste Daten einer sicherheitsrelevanten Vorrichtung aus einen bestimmten Überwachungszeitraum mit weniger alten Daten überschrieben sind
und auf dem Nutzungsdaten zusätzlich zu den Daten abgespeichert sind, welche dann, wenn die Daten aus dem Speicher ausgelesen werden, ebenfalls auslesbar sind, um ein Maß für die Abnutzung des Speichers zu erhalten,
**dadurch gekennzeichnet, dass**
auf dem Speicher in fortlaufender Weise Nutzungsdaten über den Betrieb des Speichers mit Daten mitabgespeichert sind, wobei aus den Nutzungsdaten die Gesamtdatenmenge an Daten, die seit einem Erfassen der Speichernutzungsdaten geschrieben wurde, bestimmbar ist und kein Ort der physikalischen Speicherung der Speichernutzungsdaten einen höheren Verschleiß durch häufigeren Zugriff aufweist als andere Speicherstellen.

## Claims

1. Method for storing data on a removable storage medium (2) by means of a security-relevant apparatus (1), the storage capacity of the removable storage medium sufficing during use to record data for a particular monitoring period without a memory change or overfilling, but the storage medium surviving for only a finite number of write and/or read cycles before considerable defects can be expected, wherein, so that an indication (3a) can be generated if a threshold value (Wmax) is exceeded, memory usage data are stored on the storage medium at changing locations concomitantly with data to be stored, with the result that it is possible to capture the wear and tear of the memory as a result of write and/or read access operations, **characterized in that** the data to be stored on the storage medium are uniformly distributed to blocks (B0...BN) in such a manner that all blocks are used in a largely uniform manner as far as possible, the storage medium is initialized if it is newly put into operation on the security-relevant apparatus, the number (#W(n)) of write access operations captured for this medium being set to zero, and the use by the security-relevant apparatus then comprising the fact that oldest data from a particular monitoring period are continuously overwritten with data to be newly stored, memory usage data are continuously concomitantly stored with the data to be stored in such a manner that the total volume of data written since capturing the memory usage data can be determined thereby, and that more frequent access than at other memory locations is not effected at any location of the physical storage of the memory usage data.

2. Method according to the preceding claim, **characterized in that** an electronic memory, in particular a USB stick and/or a flash card memory, is used as the storage medium.

3. Driver for using a removable storage medium methods by a security-relevant apparatus to store data according to one of the preceding.

4. Exchangeable memory for a security-relevant apparatus, the storage capacity of which suffices to record data for a particular monitoring period without a memory change or overfilling, which survives for only a finite number of write and/or read cycles before considerable defects can be expected, on which oldest data from a security-relevant apparatus from a particular monitoring period are overwritten with data which are less old, and on which usage data are stored in addition to the data, which usage data, when the data are read from the memory, can likewise be read in order to obtain a measure of the wear and tear of the memory, **characterized in that** usage data relating to the operation of the memory are continuously concomitantly stored in the memory with data, the total volume of data written since capturing the memory usage data being able to be determined from the usage data, and no location of the physical storage of the memory usage data having a higher degree of wear than other memory locations as a result of more frequent access.

## Revendications

1. Procédé de mémorisation des données sur un support de mémorisation amovible (2) par un dispositif relevant de la sécurité (1),
la capacité de mémoire du support de mémorisation amovible étant suffisante dans l'utilisation pour enregistrer des données sans changement de mémoire ou surcharge pour une certaine période de surveillance,
mais le support de mémorisation ne perdurant qu'un nombre limité de cycles d'écriture et/ou de lecture avant de s'attendre à des défauts importantes,
dans lequel, des données d'utilisation de mémoire sont déposées avec des données à mémoriser à des emplacements variables sur le support de mémorisation afin de pouvoir générer une indication (3a) en cas de dépassement d'une valeur seuil (Wmax), de telle sorte que l'usure de la mémoire peut être saisie par des accès d'écriture et/ou de lecture,
**caractérisé en ce que**
sur le support de mémorisation, les données à mémoriser sont réparties de façon uniforme sur des blocs (B0....BN) de telle manière que tous les blocs sont utilisés le plus largement possible de façon régulière,
**en ce que** le support de mémorisation est initialisé, s'il est mis à nouveau en service sur le dispositif relevant de la sécurité, le nombre (#W(n)) des accès d'écriture saisis pour ce support étant mis à zéro et
ensuite l'utilisation par le dispositif relevant de la sécurité consistant
**en ce que** les données les plus anciennes d'une certaine période de surveillance sont écrasées de manière continue par des données à mémoriser de nouveau, les données d'utilisation de mémoire sont mémorisées de manière continue avec les données à mémoriser de telle sorte que la quantité totale de données, qui a été écrite depuis la saisie des données d'utilisation de la mémoire peut être de ce fait déterminée et **en ce qu'**à aucun emplacement de la mémorisation physique des données d'utilisation de la mémoire, un accès n'a lieu plus fréquent que sur d'autres emplacements de la mémoire.

2. Procédé selon la revendication précédente, **caractérisé en ce qu'**une mémoire électronique, notamment une clé USB et/ou une mémoire à carte flash est utilisée comme support de mémorisation.

3. Pilote pour l'utilisation d'un support de mémorisation amovible par un dispositif relevant de la sécurité pour la mémorisation de données selon l'un quelconque des procédés précédents.

4. Mémoire amovible pour un dispositif relevant de la sécurité,
dont la capacité de mémoire suffit pour enregistrer des données sans changement de mémoire ou surcharge pour une certaine période de surveillance,
qui ne perdure qu'un nombre limité de cycles d'écriture et/ou de lecture avant que l'on s'attende à des défauts importants,
sur lequel les données les plus anciennes d'une certaine période de surveillance d'un dispositif relevant de la sécurité sont écrasées par des données moins anciennes,
et sur lequel des données d'utilisation sont mémorisées en plus de données, lesquelles sont également lisibles si les données sont lues à partir de la mémoire pour obtenir une mesure pour l'usure de la mémoire,
**caractérisée en ce que**
sur la mémoire sont enregistrées de manière continue des données d'utilisation concernant le fonctionnement de la mémoire avec des données, la quantité totale de données pouvant être déterminée à partir des données d'utilisation sur des données qui ont été inscrites depuis une saisie des données d'utilisation de mémoire et aucun emplacement de la mémorisation physique des données d'utilisation de mémoire ne comportant une usure plus importante par accès plus fréquent que d'autres emplacements de la mémoire.
